# EUROPEAN PATENT SPECIFICATION

(11) **EP 0 970 824 B1**
(45) Date of publication and mention of the grant of the patent: **02.02.2005**
(21) Application number: 99113521.1
(22) Date of filing: 05.07.1999
(51) Int. Cl.: B60F 3/00

(54) **Auxiliary flotation, propulsion and steering unit for tracked and/or wheeled land vehicles**
Zusatzauftriebs-, -antriebs- und -lenkvorrichtung für Raupen- oder Radfahrzeuge
Dispositif additionnel de flottaison, de propulsion et de direction pour véhicules à chenilles ou à roues

(30) Priority: 09.07.1998 IT TO980127 U
(43) Date of publication of application: 12.01.2000
(73) Proprietor: A.R.I.S. S.p.A., 10040 Lombardore, Turin (IT)
(72) Inventor: Bellezza Quater, Giorgio, 10040 Lombardore (Torino) (IT); Bellezza Quater, Paolo, 10077 S. Maurizio Canavese (Torino) (IT); Bellezza Quater, Silvia, 10077 S. Maurizio Canavese (Torino) (IT)
(74) Representative: Modiano, Guido, Dr.-Ing.

(56) References cited:
- EP-A- 0 872 366
- WO-A-95/08470
- US-A- 3 428 016
- US-A- 3 603 278
- US-A- 4 257 505

## Description

The present invention relates to an auxiliary flotation, propulsion and steering unit for tracked and/or wheeled land vehicles, particularly multipurpose tracked cargo carrier vehicles of the type known as "Cargo Carrier M548", manufactured by the US company FMC Corporation, California.

Vehicles of the above type already have a hull-like structure with watertightness characteristics which allow them to cross waterways by resting on the bottom of the waterway and also give them limited amphibian characteristics which allow them to cross small bodies of water and to move in swampy land however in shallow water.

It is also known, from EP-A-0 872 366 by the same Applicant, to equip said multipurpose vehicles with an auxiliary apparatus which is capable of significantly improving their amphibian characteristics, allowing them in particular to navigate in deep and even relatively rough water.

This known auxiliary apparatus is substantially composed of two floating sections, respectively a bow section and a stern section, which are constituted by watertight metallic containers filled with foamed material, which can be detachably associated with the hull of the multipurpose vehicle.

The bow section has profiled submerged surfaces so as to generate lift for hydrodynamic support and the stern section includes two propulsion propellers of the ducted type, driven by respective auxiliary hydraulic motors, which can be simultaneously or selectively actuated for propulsion and steering, respectively.

In multipurpose cargo carriers of the specified type, the hydrodynamic lift generated by the prow section may be insufficient, on its own, to ensure correct navigation of the fully laden vehicle, especially during deceleration, when due to the decrease in hydrodynamic lift the bow section, burdened by the weight of the powerplant and stressed by pitching moments, tends to sink below the waterline.

The aim of the present invention is to provide an auxiliary flotation unit adapted for multipurpose cargo carriers of the specified type and more generally for cargo carriers having a considerable tonnage, particularly between 10 and 30 tons when fully laden.

This aim is achieved, according to the present invention, with an auxiliary flotation unit which comprises at least one bow flotation section and one stern flotation section, both whereof are constituted by watertight metallic containers filled with foamed material, wherein the bow section, in besides being profiled so as to generate lift for hydrodynamic support, includes two propulsion and steering propellers of the ducted type, which can be simultaneously or selectively actuated and in which the containment ducts are orientated so that the jets of water generated by said ducted propellers have vertical thrust components which are directed upwardly and are designed to provide auxiliary supporting actions for said bow section.

The invention will become apparent from the following detailed description and with reference to the non-limitative accompanying drawings, wherein:

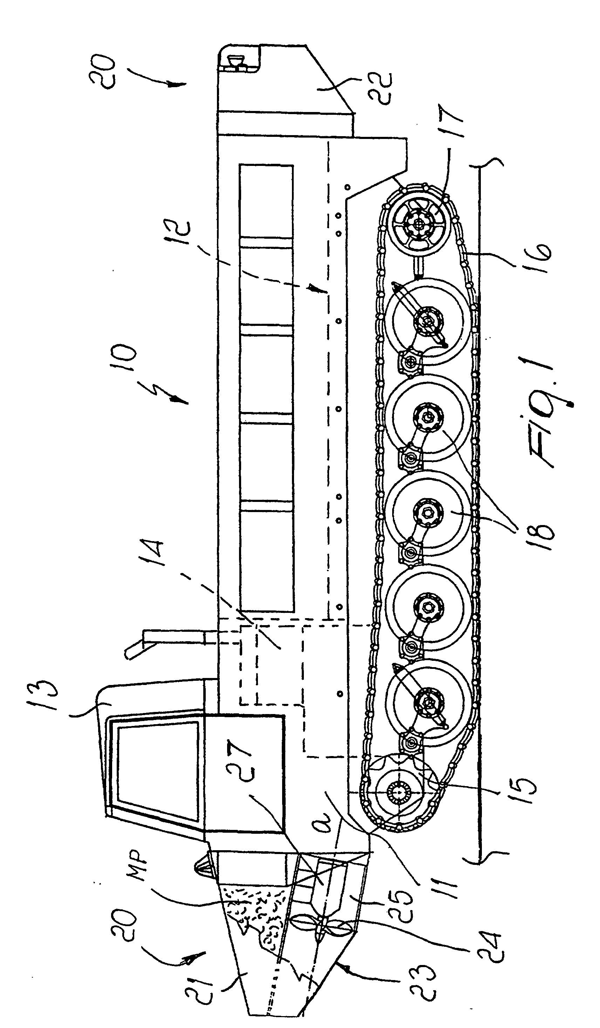

Figure 1 is an elevation view of the known tracked cargo carrier type M548, with the auxiliary unit according to the present invention;
Figure 2 is a schematic plan view of the vehicle of Figure 1, illustrating in particular the hydraulic means for driving the propulsion propellers;

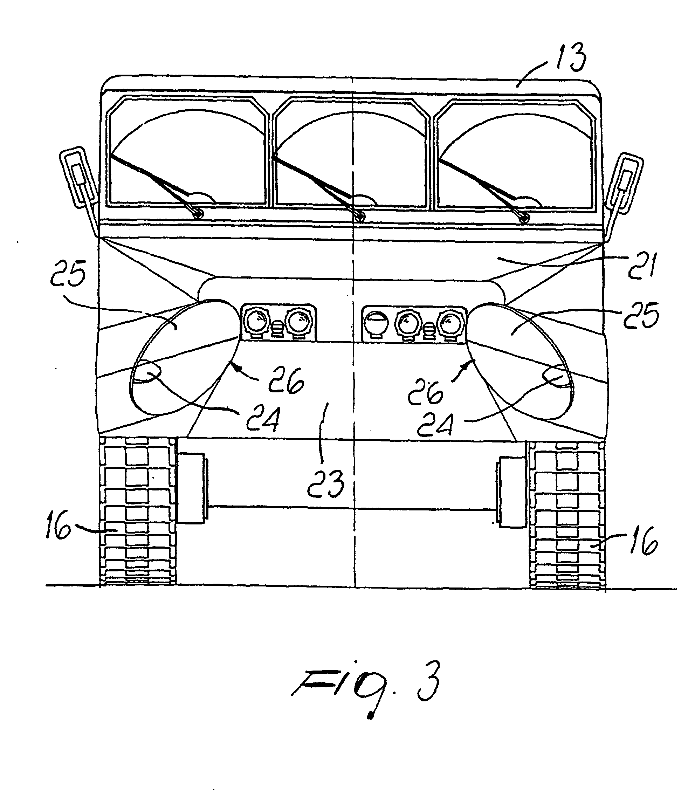

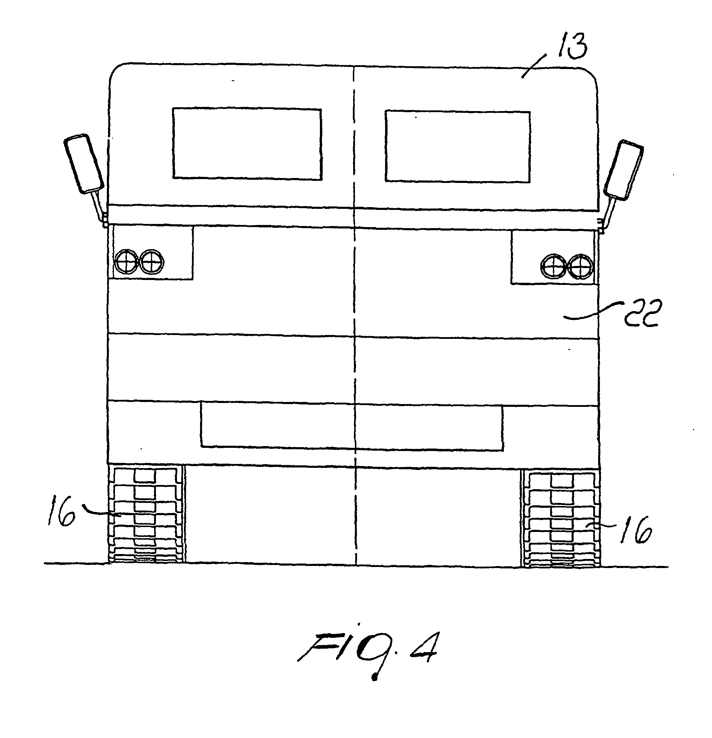

Figures 3 and 4 are a front view and a rear view, respectively, of the vehicle of Figure 1.

In the drawings, 10 generally designates the M548 cargo carrier, which comprises a watertight hull-like structure 11, with a loading deck 12, a steering cabin 13 and a powerplant 14 which is located between the cabin and the deck and is suitable to drive, through a pair of gears 15, a corresponding pair of tracks 16 with which driving wheels 17 and supporting wheels 18 cooperate.

Reference numeral 20 generally designates the auxiliary unit according to the present invention, which is composed of at least one bow flotation section 21 and one stern flotation section 22. Both of said flotation sections are constituted by watertight metallic containers or tanks, advantageously made of aluminum alloy, in which the watertight cavity is filled with foamed and/or expanded polymeric material MP; said sections are detachably connected to the hull 11, preferably by means of bolts (not shown) which engage the holes of corresponding L-shaped brackets provided on said hull. The bow flotation section 21 has submerged surfaces 23 which are profiled in order to generate lift for hydrodynamic support when the vehicle is navigating and is further provided with a pair of propellers 24 which are suitable for vehicle propulsion and steering.

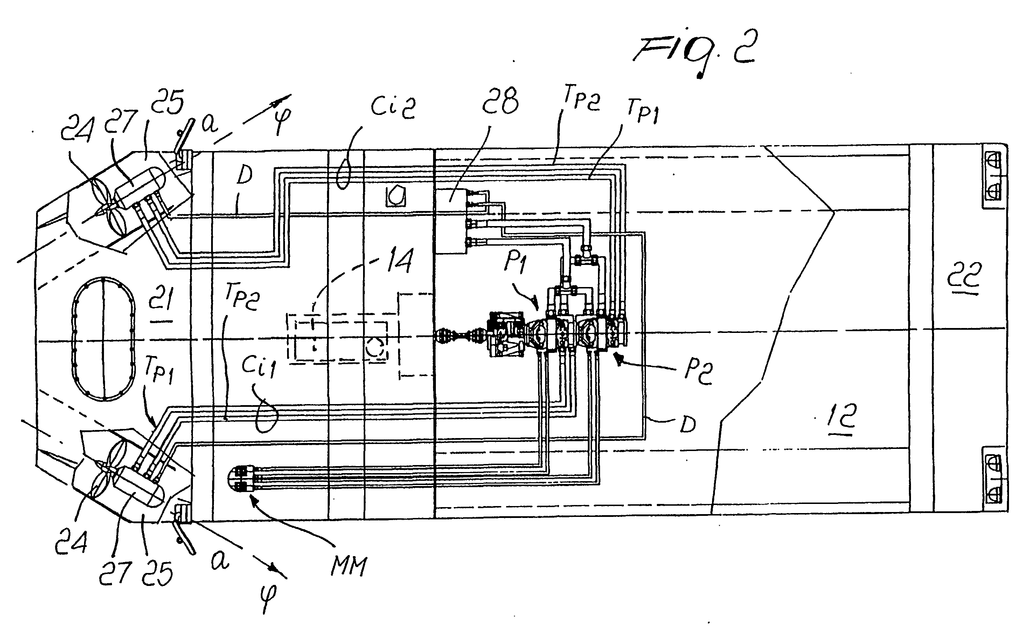

As clearly shown in figure 2, the propellers 24 are of the ducted type and the ducts 25 that contain them have, with respect to the direction of the water jet ϕ generated by said propellers, front hydrodynamic intakes 26 and axes "a" which are inclined downwardly so as to produce water flows or jets which have upward vertical thrust components which constitute auxiliary actions for supporting the vehicle 10.

According to the invention, the axes "a" of the ducts 25 also diverge, so as to produce jets with lateral thrust components which facilitate the steering of said vehicle when the propellers 22 are actuated selectively for maneuvering.

For this purpose, each propeller 24 is driven by a corresponding hydraulic motor 27 of the reversible variable-displacement type and maneuvering means MM are provided in order to operate said motors simultaneously or selectively. The motors 27 are driven by respective hydraulic pumps P1-P2 which are supplied by a tank 28 and are mechanically connected to each other in a tandem configuration and are driven, by means of a power take-off, by the powerplant 14 of the vehicle 10.

Each pump is connected to the respective motor 27 by means of a corresponding hydraulic circuit Ci1-Ci2, which comprises pressurized delivery and return pipes Tp1-Tp2 and a drainage duct D. The pipes of the hydraulic circuits Ci1-Ci2 extend in a protected position however outside the hull 11 and below the waterline, preferably under the loading deck 12, so as to be cooled by the surrounding water; optional heat exchangers are located on said pipes in order to improve the cooling of the hydraulic fluid.

The effects of the present invention of course cover models that achieve equal utility by using the same innovative concept.

In particular, the alternative arrangement in which the propulsion propellers are driven directly by the powerplant 14 by means of a mechanical transmission achieves equal utility.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An auxiliary flotation, propulsion and steering unit for tracked and/or wheeled land vehicles, particularly cargo carriers (10) of the "Cargo Carrier M548" type, of the kind that comprises at least one bow flotation section (21) and one stern flotation section (22), both whereof are constituted by watertight containers filled with foamed material (MP) which are detachably connected to the hull of said vehicle and wherein the bow section (21) is profiled so as to generate lift for hydrodynamic support, **characterized in that** said bow section (21) includes two propulsion and steering propellers (24) of the ducted type, which can be simultaneously or selectively actuated and in which the containment ducts (25) are orientated with the axes (a) thereof inclined downward, so that water jets generated by said ducted propellers (24) have vertical thrust components which are directed upwardly whereby to provide auxiliary supporting actions for said bow section (21).

2. An auxiliary unit according to claim 1, **characterized in that** the axes (a) of the ducts (25) for containing the ducted propellers (24) diverge so that the water jets generated by said propellers (24) have lateral thrust components which facilitate the steering of said vehicle.

3. An auxiliary unit according to claim 1 or claims 1 and 2, **characterized in that** each propeller (24) is driven by a corresponding hydraulic motor (27) of the reversible variable-displacement type, and **in that** maneuvering means (MM) are provided for actuating said motors simultaneously for propulsion or selectively for maneuvering.

4. An auxiliary unit according to claims 1 to 3, **characterized in that** said motors (27) are supplied by corresponding hydraulic circuits (Ci1-Ci2) which comprise respective hydraulic pumps (P1-P2) arranged in a tandem configuration and driven by the powerplant (14) of the vehicle (10).

5. An auxiliary unit according to claim 4, **characterized in that** said hydraulic circuits extend on the outside of the hull (11) of the vehicle under the loading deck (12) and below the waterline, so as to be cooled by the surrounding water.

## Patentansprüche

1. Zusatzauftriebs-, -antriebs- und -lenkvorrichtung für Raupen- und/oder Radfahrzeuge, insbesondere Fahrzeuge (10) zur Beförderung von Fracht vom Typ "Cargo Carrier M548", von der Art, die mindestens einen Bugauftriebsabschnitt (21) und einen Heckauftriebsabschnitt (22) aufweist, von denen beide von wasserdichten, mit geschäumtem Material (MP) gefüllten Behältern gebildet werden, die lösbar mit dem Rumpf des Fahrzeugs verbunden sind, und bei welcher der Bugabschnitt (21) ein solches Profil besitzt, dass er einen Auftrieb zur hydrodynamischen Lagerung oder Unterstützung erzeugt, **dadurch gekennzeichnet, dass** der genannte Bugabschnitt (21) zwei Antriebsund Lenkschrauben (24) in Leitkanalbauweise aufweist, die gleichzeitig oder selektiv ansteuerbar sind und bei denen die Leitkanäle (25) in der Weise ausgerichtet ist, dass die Achsen (a) hiervon nach unten so schräg gestellt sind, dass von den Leitkanalschrauben (24) erzeugte Wasserstrahlen vertikale Schubkomponenten aufweisen, die nach oben gerichtet sind, wodurch zusätzliche Abstützwirkungen für den Bugabschnitt (21) entstehen.

2. Zusatzvorrichtung nach Anspruch 1, **dadurch gekennzeichnet, dass** die Achsen (a) der Leitkanäle (25) zum Umschließen der Leitkanalschrauben (24) in der Weise divergierend zueinander verlaufen, dass die von den Schrauben (24) erzeugten Wasserstrahlen seitliche Schubkomponenten aufweisen, welche das Lenken des Fahrzeugs vereinfachen.

3. Zusatzvorrichtung nach Anspruch 1 oder nach den Ansprüchen 1 und 2, **dadurch gekennzeichnet, dass** jede Schraube (24) von einem entsprechenden Hydraulikmotor (27) mit umsteuerbarem, veränderlichem Hub angetrieben wird und dass Manövriereinrichtungen (MM) vorgesehen sind, um die Motoren für den Antrieb gleichzeitig oder zum Manövrieren selektiv anzusteuern.

4. Zusatzvorrichtung nach den Ansprüchen 1 bis 3, **dadurch gekennzeichnet, dass** die Motoren (27) durch entsprechende Hydraulikkreise (Ci1-Ci2) versorgt werden, welche jeweils Hydraulikpumpen (P1-P2) aufweisen, die hintereinander angeordnet sind und vom Antriebsaggregat (14) des Fahrzeugs (10) angetrieben werden.

5. Zusatzvorrichtung nach Anspruch 4, **dadurch gekennzeichnet, dass** sich die genannten Hydraulikkreise auf der Außenseite des Rumpfes (11) des Fahrzeugs unter der Ladefläche (12) und unter der Wasserlinie erstrecken, so dass sie durch das sie umgebende Wasser gekühlt werden.

## Revendications

1. Unité auxiliaire de flottaison, de propulsion et de pilotage pour véhicules terrestres à chenilles et/ou à roues, en particulier pour véhicules de transport (10) du type « Cargo Carrier M548 », comprenant au moins une section de flottaison de proue (21) et une section de flottaison de poupe (22), toutes deux étant constituées de réservoirs étanches remplis de matériau alvéolaire (MP) reliés de manière détachable à la coque dudit véhicule et où la section de proue (21) est profilée pour générer une portance afin d'offrir un soutien hydrodynamique, **caractérisée en ce que** ladite section de proue (21) comprend deux hélices de propulsion et de pilotage (24) du type caréné, pouvant être actionnées simultanément ou de manière sélective et où les conduits de confinement (25) sont orientés selon des axes (a) inclinés vers le bas, de sorte que les jets d'eau générés par lesdites hélices carénées (24) présentent des composantes de poussée verticale dirigées vers le haut fournissant ainsi un soutien auxiliaire à ladite section de proue (21).

2. Unité auxiliaire selon la revendication 1, **caractérisée en ce que** les axes (a) des conduits de confinement (25) des hélices carénées (24) divergent d'une façon telle que les jets d'eau générés par lesdites hélices (24) présentent des composantes de poussée latérale qui facilitent le pilotage dudit véhicule.

3. Unité auxiliaire selon la revendication 1 ou les revendications 1 et 2, **caractérisée en ce que** chaque hélice (24) est entraînée par un moteur hydraulique (27) correspondant du type réversible à cylindrée variable, et **en ce que** sont prévus des moyens de manoeuvre (MM) pour actionner lesdits moteurs simultanément pour la propulsion ou de manière sélective pour les manoeuvres.

4. Unité auxiliaire selon les revendications 1 à 3, **caractérisée en ce que** lesdits moteurs (27) sont alimentés par des circuits hydrauliques correspondants (Ci1-Ci2) comprenant respectivement des pompes hydrauliques (P1-P2) disposées selon une configuration en tandem et entraînées par l'installation motrice (14) du véhicule (10).

5. Unité auxiliaire selon la revendication 4, **caractérisée en ce que** lesdits circuits hydrauliques se prolongent hors de la coque (11) du véhicule sous le plateau de chargement (12) et sous la ligne de flottaison de manière à être refroidis par l'eau environnante.
